# EUROPÄISCHE PATENTSCHRIFT

(11) **EP 0 894 351 B1**
(45) Veröffentlichungstag und Bekanntmachung des Hinweises auf die Patenterteilung: **21.11.2001**
(21) Anmeldenummer: 97920636.4
(22) Anmeldetag: 10.04.1997
(51) Int. Cl.: H02B 1/30

(54) **ARBEITSPLATTE FÜR EINEN SCHALTSCHRANK**
OPERATIVE PLATE FOR A SWITCH CUBICLE
TABLETTE FONCTIONNELLE POUR ARMOIRE DE DISTRIBUTION

(30) Priorität: 19.04.1996 DE 19615431
(43) Veröffentlichungstag der Anmeldung: 03.02.1999
(73) Patentinhaber: Rittal-Werk Rudolf Loh GmbH & Co. KG, 35745 Herborn (DE)
(72) Erfinder: ZACHRAI, Jürgen, D-35690 Dillenburg (DE)
(74) Vertreter: Fleck, Hermann-Josef, Dr.-Ing.
(86) Internationale Anmeldenummer: EP9701769
(87) Internationale Veröffentlichungsnummer: WO9740562

(56) Entgegenhaltungen:
- DE-A- 2 530 603
- DE-A- 4 312 816
- US-A- 4 791 873
- US-A- 5 381 738
- US-A- 5 408 936

## Beschreibung

Die Erfindung betrifft eine Arbeitsplatte, die an einem Wandelement oder einer Tür eines Schaltschrankes angebracht und aus einer zum Wandelement oder zur Tür parallelen Ablagestellung in eine abgeklappte Arbeitsstellung bringbar ist, wobei die in der Ablagestellung obere horizontale Seite der Arbeitsplatte mittels Gelenkbolzen in wandelement- oder türfesten Einführschlitzen vertikal verstellbar geführt ist, wobei die vertikalen Seiten der Arbeitsplatte über je einen Lenker am Wandelement oder an der Tür gelenkig abgestützt sind, wobei die Gelenkpunkte der Lenker am Wandelement oder an der Tür angeordnet sind und mit der Abmessung der Lenker so ausgelegt sind, dass bei in Halteaufnahmen eingeführten Gelenkbolzen die Arbeitsplatte die gewünschte Arbeitsstellung zum Wandelement oder zur Tür einnimmt.

Eine solche Arbeitsplatte ist aus der DE 25 30 603 bekannt. Dieses Dokument beschreibt eine klappbare Arbeitsplatte, die an einer Wand befestigt ist. Die Befestigung erfolgt durch Zapfen, die an der Platte angeordnet sind und die durch an Führungsrohren angeordnete Schlitze hindurchtreten. Die Führungsrohre sind mit einem Wandelement fest verbunden. Die vertikalen Seiten der Platte sind über je einen Lenker am Wandelement gelenkig abgestützt. Die Platte kann in der Höhe verstellt und bei Nichtgebrauch zurückgeklappt werden. Um die Platte in einer bestimmten Position zu halten, werden die Zapfen in Halteaufnahmen in den Schlitzen eingeführt. Um zu verhindern, dass die Arbeitsplatte herabfällt, müssen Feststellschrauben betätigt werden.

In der DE 43 12 816 A1 sind die Klappenhalter beschrieben, bestehend aus zwei gelenkig miteinander verbundenen Lenkern, deren freie Enden an der Arbeitsplatte bzw. am Wandelement oder der Tür angelenkt sind. In der Strecklage der beiden Lenker liegen die Klappenhalter die Arbeitsstellung der Arbeitsplatte fest, während sie in der Ablagestellung aufeinander geschwenkt werden. Die Klappenhalter erstrecken sich in der Arbeitsstellung der Arbeitsplatte zumindest über einen Teil der beiden Seiten der Arbeitsplatte und beeinträchtigen daher mehr oder weniger das Arbeiten auf der Arbeitsplatte.

Es ist Aufgabe der Erfindung, eine Arbeitsplatte der eingangs erwähnten Art zu schaffen, die einfach handhabbarist und die sich sicher in der Arbeitsstellung fixieren lässt.

Diese Aufgabe wird nach der Erfindung dadurch gelöst, dass die unteren Enden der Führungsschlitze über von Wandelement oder von der Tür weggerichtete Übergangsabschnitte in nach oben weisende Halteaufnahmen für die Gelenkbolzen übergehen, und dass in der Arbeitsstellung die Gelenkpunkte der Lenker an der Arbeitsplatte unterhalb der Gelenkbolzen angeordnet sind.

Zum Einstellen der Arbeitsplatte in die Arbeitsstellung wird sie an der unteren horizontalen Seite gefaßt und angehoben. Dabei gleiten die Gelenkbolzen in den Führungsschlitzen nach unten. Kurz vor Erreichen der Arbeitsstellung wird die Arbeitsplatte in den Übergangsabschnitten etwas vom Wandelement oder der Tür wegbewegt, wobei sie durch ihr Eigengewicht die Gelenkbolzen in die Halteaufnahmen der Führungsschlitze einführt und so die Arbeitsstellung festlegt. Soll die Arbeitsplatte wieder in die Ablagestellung parallel zum Wandelement oder zur Tür gebracht werden, dann wird die freie vorstehende Seite der Arbeitsplatte leicht angehoben, wobei die Gelenkbolzen die Halteaufnahmen der Führungsschlitze verlassen. Durch geringe Verschiebung der Arbeitsplatte in Richtung zum Wandelement oder zur Tür werden die Übergangsabschnitte überwunden und die Gelenkbolzen gelangen in die vertikalen Bereiche der Führungsschlitze. Läßt man die Arbeitsplatte los, dann geht sie getrieben von ihrem Eigengewicht in ihre Ablagestellung, die dann erreicht ist, wenn die Gelenkbolzen an den oberen Enden der Führungsschlitze anliegen.

Die Lenker liegen in der Arbeitsstellung stets unterhalb der Oberseite der Arbeitsplatte und behindern das Arbeiten auf derselben in keiner Weise. Die Änderung der Ablagestellung in die Arbeitsstellung und umgekehrt ist mit einfachen Handgriffen vornehmbar.

Ist nach einer Ausgestaltung vorgesehen, daß die Gelenkbolzen und die Gelenkpunkte an einem abgebogenen Rand der Arbeitsplatte angeordnet sind,
wobei der Rand in die parallelen Ablagestellung zum Wandelement oder zur Tür gerichtet ist, dann hat die Arbeitsplatte nicht nur eine ausreichende Steifigkeit, der Rand erleichtert auch das Anbringen der Gelenkbolzen und der Lenker. Dabei ist vorzugsweise vorgesehen, daß der Rand sich über alle vier Seiten der rechteckförmigen Arbeitsplatte erstreckt.

Für die Führung der Gelenkbolzen der Arbeitsplatte bei der Veränderung der Stellung ist vorgesehen, daß der Führungsschlitz, der Übergangsabschnitt und die Halteaufnahme in einem Seitenschenkel einer Befestigungsleiste eingebracht sind,der senkrecht zum Wandelement oder zur Tür steht. Dabei läßt sich die Führung einfach dadurch erreichen und verbessern, daß die Gelenkbolzen an der Arbeitsplatte durch Schrauben mit Schraubenköpfen gebildet sind, die durch die Führungsschlitze hindurch in den Rand der Arbeitsplatte eingeschraubt sind, wobei der Schraubenkopf im Durchmesser größer ist als die Breite der Führungsschlitze.

Die Befestigung der Befestigungsleiste am Wandelement oder an der Tür ist nach einer Ausgestaltung dadurch auf einfache Weise gelöst, daß die Befestigungsleiste U-förmig ausgebildet und mit ihrem Mittelschenkel am Wandeiement oder an der Tür anliegt, und daß an dem der Arbeitsplatte abgekehrten Seitenschenkel der Befestigungsleiste Einhängelaschen abgebogen sind, mit denen die Befestigungsleiste an einem mit dem Wandelement oder mit der Tür verbundenen Versteifungsrahmen festgeschraubt ist.

Damit die Lenker das Einstellen der Arbeits- und Ablagestellung der Arbeitsplatte nicht beeinträchtigen, ist nach einer Ausgestaltung vorgesehen, daß die Lenker auf den der Arbeitsplatte abgekehrten Seiten der mit den Führungsschlitzen versehenen Seitenschenkel der Befestigungsleisten angelenkt sind und daß die Lenker an der Arbeitsplatte über Distanzelemente angelenkt sind, so daß sie in der Ablagestellung auf die der Arbeitsplatte abgekehrten Seiten der mit den Führungsschlitzen versehenen Seitenschenkel der Befestigungsleisten zu liegen kommen, und daß diese Seitenschenkel mit Ausnehmungen zur Aufnahme der Distanzelemente der arbeitsplattenfesten Gelenkpunkte versehen sind.

Ein bevorzugtes Ausführungsbeispiel sieht vor, daß sie in der Arbeitsstellung senkrecht zum Wandelement oder zur Tür steht.

Ist die Ausgestaltung so, daß die Führungsschlitze zu den oberen Enden hin mit zunehmendem Abstand zum Wandelement oder zur Tür ausgebildet sind, damit in der Ablagestellung der Rand der Arbeitsplatte Platz findet, dann kann die Arbeitsplatte in der Arbeitsstellung sehr nahe an das Wandelement oder an die Tür heranreichen.

Die Erfindung wird anhand eines in den Zeichnungen dargestellten Ausführungsbeispiels näher erläutert. Es zeigen:
- Fig. 1: eine in der Ablagestellung befindliche Arbeitsplatte mit der Anbringung auf der Innenseite einer Tür eines Schaltschrankes,
- Fig. 2: die an der Tür angebrachte und in die Arbeitsstellung gebrachte Arbeitsplatte und
- Fig. 3: in vergrößerter Teilansicht eine Befestigungsplatte mit dem Teil, in dem der Gelenkbolzen der Arbeitsplatte geführt ist.

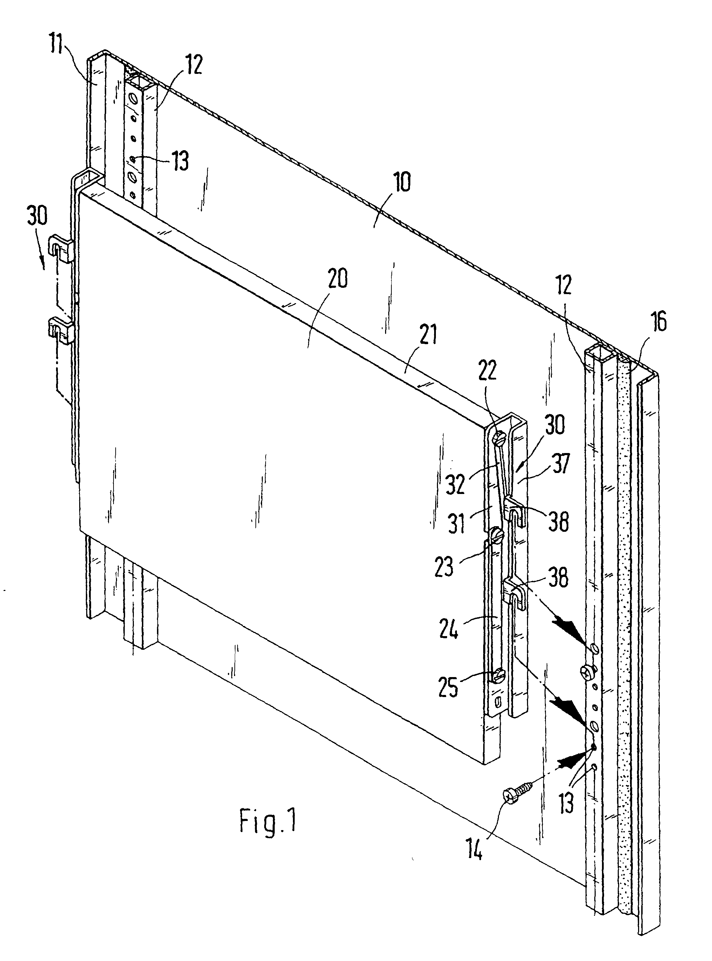

In Fig. 1 ist eine Tür 10 eines Schaltschrankes, auf deren Innenseite gesehen, gezeigt, wobei nur der Bereich zu sehen ist, in dem eine Arbeitsplatte 20 angebracht wird. Die Tür 10 ist durch einen nach innen abgebogenen Rand 11 versteift, der sich über alle vier Seiten erstrecken kann. Auf der Innenseite der Tür 10 ist ein Versteifungsrahmen angebracht, von dem Teile der vertikalen Schenkel 12 zu sehen sind. Diese Schenkel 12 sind mit Befestigungsbohrungen 13 versehen. Zwischen dem Rand 11 und dem Versteifungsrahmen ist ein Dichtungselement 16 angeordnet, das die Tür 10 abdichtet, wenn sie die zugeordnete, offene Seite des Schaltschrankes verschließt.

Die in der Ablagestellung gezeigte Arbeitsplatte 20 ist an den beiden, vertikalen Seiten mit je einer Befestigungsleiste 30 verbunden, wie noch gezeigt wird. Diese Befestigunsleisten 30 sind U-förmig, wobei die der Arbeitsplatte 20 abgekehrten Seitenschenkel 37 mit abgebogenen Einhängehaken 38 versehen sind. Der Abstand der beiden Einhängehaken 38 ist auf die Teilung der Befestigungsbohrungen 13 in den Schenkeln 12 des Versteifungsrahmens abgestimmt. Sind in zugeordneten Befestigungsbohrungen 13 Schrauben 14 eingeschraubt, dann kann die Einheit aus Arbeitsplatte 20, Lenkern 24 und Befestigungsleisten 30 an den Schrauben 14 eingehängt und durch Festziehen derselben daran befestigt werden. Dabei ist die Außenabmessung der Einheit auf den Abstand der vertikalen Schenkel 12 des Versteifungsrahmens abgestimmt.

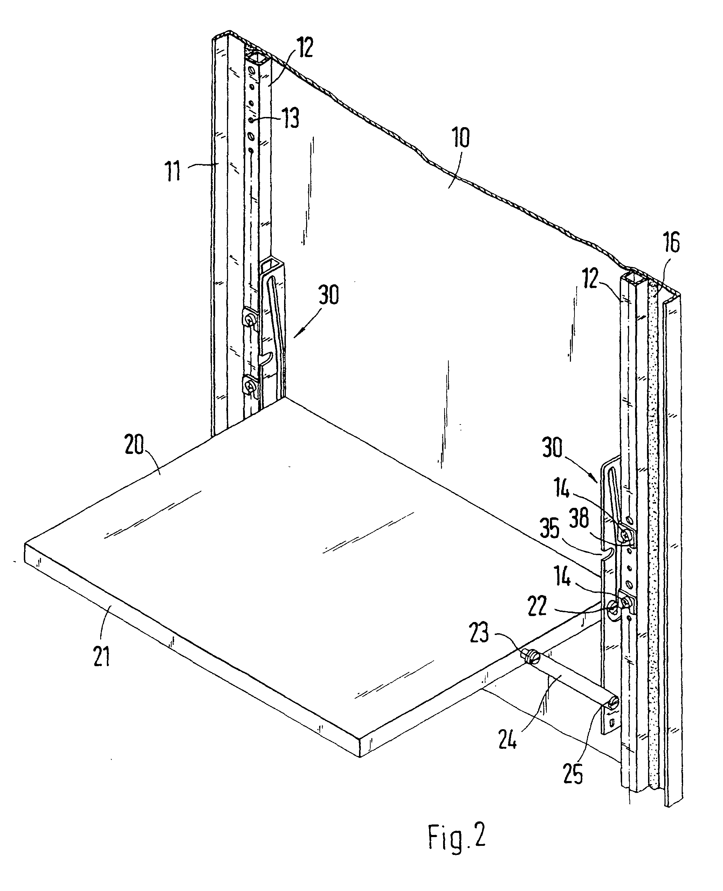

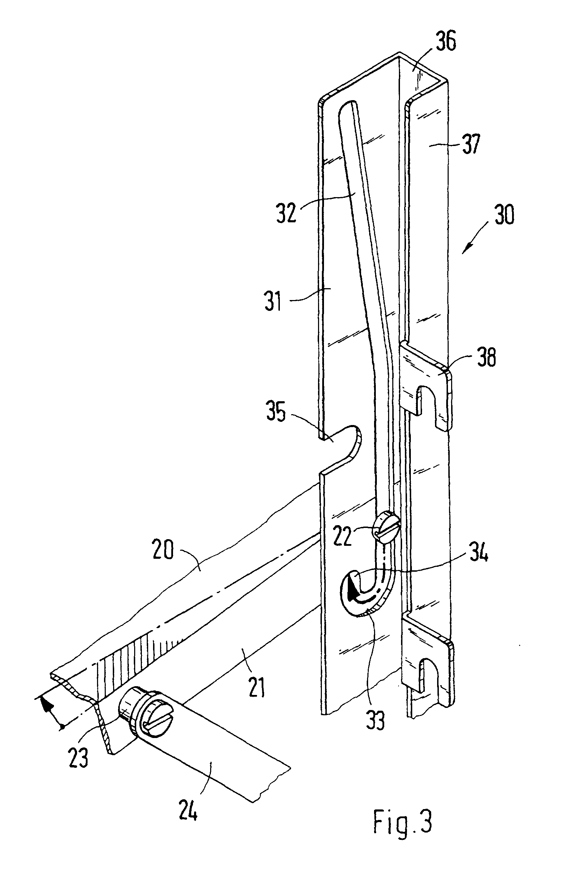

Wie den Fig. 2 und 3 zu entnehmen ist, werden im Bereich der oberen, horizontalen Seite der Arbeitsplatte 20 in den seitlichen Rand 21 zwei Gelenkbolzen 22 eingebracht, die als Schrauben mit Schraubenkopf ausgebildet und in den Rand 21 eingeschraubt sind. Der Schraubenkopf hat einen Durchmesser, der größer ist als die Breite von Führungsschlitzen 32, die in dem der Arbeitsplatte 20 zugekehrten Seitenschenkel 31 der Befestigungsleisten 30 eingebracht sind. Die Schrauben sind dabei durch die Führungsschlitze 32 hindurchgeführt und mit dem Rand 21 verschraubt. Auf jeder Seite der Arbeitsplatte 20 ist ein Lenker 24 vorgesehen, der auf der einen Seite am Gelenkpunkt 23 mit der Arbeitsplatte 20 und auf der anderen Seite am Gelenkpunkt 25 an der Befestigungsleiste 30 gelenkig angebracht ist. Dabei ist der Gelenkpunkt 25 auf die der Arbeitsplatte 20 abgekehrten Seite des Seitenschenkels 31 gelegt. Der Gelenkpunkt 23 an der Arbeitsplatte 20 schließt ein Distanzelement ein, so daß der Lenker 24 in der Ablagestellung ebenfalls auf die der Arbeitsplatte 20 abgekehrten Seite des Seitenschenkels 31 zu liegen kommt. Der Seitenschenkel 31 hat dabei eine nach vorne offene Ausnehmung 35 zur Aufnahme des Distanzelementes des Gelenkpunktes 23.

Es ist zu bemerken, daß auf der nicht in Einzelheiten erkennbaren linken Seite der Arbeitsplatte 20 die Befestigungsleiste 30 spiegelbildlich ausgebildet ist, während der Lenker 24 in gleicher Relation an der Befestigungsleiste 30 und der Arbeitsplatte 20 angelenkt ist.

Die Führungsschlitze 32 in den Seitenschenkeln 31 der Befestigungsleisten 30 nehmen die Gelenkbolzen 22 der Arbeitsplatte 20 auf, so daß diese vertikal verstellbar geführt sind. Die unteren Enden der Führungsschlitze 32 gehen über Übergangsabschnitte 33 in Halteaufnahmen 34 für die Gelenkbolzen 22 über. Die Übergangsabschnitte 33 führen von der Tür 10 weg und die Halteaufnahmen 34 führen weiter nach oben, so daß sie die Gelenkbolzen 22 aufnehmen und festhalten können, wenn die Arbeitsplatte 20 in der Arbeitsstellung durch ihr Eigengewicht um die durch die Gelenkpunkte 23 gebildete Achse schwenkbar beansprucht und dadurch in den Halteaufnahmen 34 gehalten ist. Der wesentliche Teil der Führungsschlitze 32 verläuft vertikal in kleinem Abstand zur Tür 10. Lediglich im Bereich des oberen Endes vergrößert sich der Abstand der Führungsschlitze 32 zur Tür 10, damit in der Ablagestellung ausreichend Platz für den zur Tür 10 gerichteten Rand 21 der Arbeitsplatte 20 gegeben ist.

Die Gelenkpunkte 23 an der Arbeitsplatte 20 liegen unterhalb der Gelenkbolzen 22 und die Gelenkpunkte 25 der Lenker 24 an den Befestigungsleisten 30 tiefer als die Halteaufnahmen 34. Mit der Abmessung der Lenker 24 und der Lage der Gelenkpunkte 23 und 25 kann die Neigung der Arbeitsplatte 20 in der Arbeitsstellung festgelegt werden, wobei vorzugsweise eine senkrecht zur Tür 10 stehende Stellung bevorzugt wird. Die Arbeitsplatte 20 kann jedoch auch leicht nach vorne abfallend in der Arbeitsstellung stehen.

Wie Fig. 2 zeigt, liegen die Lenker 24 in der Arbeitsstellung unterhalb der Arbeitsseite der Arbeitsplatte 20 und beeinträchtigten das Arbeiten auf derselben in keiner Weise, so daß auch über die beiden Seiten hinausragende Gegenstände abgelegt werden können.

Wird aus der Ablagestellung nach Fig. 1 die Arbeitsplatte 20 in die Arbeitsstellung nach Fig. 2 verstellt, dann wird die Arbeitsplatte 20 an der unteren horizontalen Seite gefaßt und nach oben verschwenkt. Dabei gleiten die Gelenkbolzen 22 in den Führungsschlitzen 32 nach unten, bis sie die Übergangsabschnitte 33 erreichen. Die Arbeitsplatte 20 wird nach vorne gezogen und losgelassen. Aufgrund des Eigengewichts schwenkt die Arbeitsplatte 20 leicht nach unten, wobei die Gelenkbolzen 22 in die Halteaufnahmen 34 eingeführt werden. Die Arbeitsstellung der Arbeitsplatte 20 ist festgelegt, sie wird auch bei einer Belastung der Arbeitsplatte 20 nicht verändert.

Soll die Arbeitsplatte 20 aus der Arbeitsstellung nach Fig. 2 wieder in die Ablagestellung nach Fig. 1 gebracht werden, dann wird die freie Seite der Arbeitsplatte 20 leicht angehoben. Dabei werden die Gelenkbolzen 22 aus den Halteaufnahmen 34 herausgeführt. Durch Verstellen der Arbeitsplatte 20 in Richtung zur Tür 10 werden die Gelenkbolzen 22 über die Übergangsabschnitte 33 in den Bereich der vertikal ausgerichteten Bereiche der Führungsschlitze 32 gebracht. Wird die Arbeitsplatte 20 vorne nach unten gedrückt, dann kehrt sie beim Einlauf der Gelenkbolzen 22 aufgrund ihres Eigengewichts selbstätig in die Ablagestellung zurück, die dann erreicht ist, wenn die Gelenkbolzen 22 an den oberen Enden der Führungsschlitze 32 anliegen.

## Patentansprüche

1. Arbeitsplatte, die an einem Wandelement oder einer Tür eines Schaltschrankes angebracht und aus einer zum Wandelement oder zur Tür parallelen Ablagestellung in eine abgeklappte Arbeitsstellung bringbar ist, wobei die in der Ablagestellung obere horizontale Seite der Arbeitsplatte (20) mittels Gelenkbolzen (22) in wandelement- oder türfesten Einführschlitzen (32) vertikal verstellbar geführt ist, wobei die vertikalen Seiten der Arbeitsplatte (20) über je einen Lenker (24) am Wandelement oder an der Tür (10) gelenkig abgestützt sind, wobei die Gelenkpunkte (25) der Lenker (24) am Wandelement oder an der Tür (32) angeordnet sind und mit der Abmessung der Lenker (24) so ausgelegt sind, dass bei in Halteaufnahmen (34) eingeführten Gelenkbolzen (22) die Arbeitsplatte (20) die gewünschte Arbeitsstellung zum Wandelement oder zur Tür (10) einnimmt,
**dadurch gekennzeichnet,**
**dass** die unteren Enden der Führungsschlitze (32) über von Wandelement oder von der Tür (10) weggerichtete Übergangsabschnitte (33) in nach oben weisende Halteaufnahmen (34) für die Gelenkbolzen (22) übergehen, und
**dass** in der Arbeitsstellung die Gelenkpunkte (23) der Lenker (24) an der Arbeitsplatte (20) unterhalb der Gelenkbolzen (22) angeordnet sind.

2. Arbeitsplatte nach Anspruch 1,
**dadurch gekennzeichnet,**
**daß** die Gelenkbolzen (22) und die Gelenkpunkte (23) an einem abgebogenen Rand (21) der Arbeitsplatte (20) angeordnet sind, wobei der Rand (21) in die parallelen Ablagestellung zum Wandelement oder zur Tür (10) gerichtet ist.

3. Arbeitsplatte nach Anspruch 2,
**dadurch gekennzeichnet,**
**daß** der Rand (21) sich über alle vier Seiten der rechteckförmigen Arbeitsplatte (20) erstreckt.

4. Arbeitsplatte nach einem der Ansprüche 1 bis 3,
**dadurch gekennzeichnet,**
**daß** der Führungsschlitz (32), der Übergangsabschnitt (33) und die Halteaufnahme (34) in einem Seitenschenkel (31) einer Befestigungsleiste (30) eingebracht sind, der senkrecht zum Wandelement oder zur Tür (10) steht.

5. Arbeitsplatte nach einem der Ansprüche 1 bis 4,
**dadurch gekennzeichnet,**
**daß** die Gelenkbolzen (22) an der Arbeitsplatte (20) durch Schrauben mit Schraubenköpfen gebildet sind, die durch die Führungsschlitze (32) hindurch in den Rand (21) der Arbeitsplatte (20) eingeschraubt sind, wobei der Schraubenkopf im Durchmesser größer ist als die Breite der Führungsschlitze (32).

6. Arbeitsplatte nach einem der Ansprüche 1 bis 5,
**dadurch gekennzeichnet,**
**daß** die Befestigungsleiste (30) U-förmig ausgebildet und mit ihrem Mittelschenkel (36) am Wandelement oder an der Tür (10) anliegt, und
**daß** an dem der Arbeitsplatte (20) abgekehrten Seitenschenkel (37) der Befestigungsleiste (30) Einhängelaschen (38) abgebogen sind, mit denen die Befestigungsleiste (30) an einem mit dem Wandelement oder mit der Tür (10) verbundenen Versteifungsrahmen (12) festgeschraubt ist.

7. Arbeitsplatte nach einem der Ansprüche 1 bis 6,
**dadurch gekennzeichnet,**
**daß** die Lenker (24) auf den der Arbeitsplatte (20) abgekehrten Seiten der mit den Führungsschlitzen (32) versehenen Seitenschenkel (31) der Befestigungsleisten (30) angelenkt sind.

8. Arbeitsplatte nach einem der Ansprüche 1 bis 7,
**dadurch gekennzeichnet,**
**daß** die Lenker (24) an der Arbeitsplatte (20) über Distanzelemente angelenkt sind, so daß sie in der Ablagestellung auf die der Arbeitsplatte (20) abgekehrten Seiten der mit den Führungsschlitzen (32) versehenen Seitenschenkel (31) der Befestigungsleisten (30) zu liegen kommen, und
**daß** diese Seitenschenkel (31) mit Ausnehmungen (35) zur Aufnahme der Distanzelemente der arbeitsplattenfesten Gelenkpunkte (23) versehen sind.

9. Arbeitsplatte nach einem der Ansprüche 1 bis 8,
**dadurch gekennzeichnet,**
**daß** sie in der Arbeitsstellung senkrecht zum Wandelement oder zur Tür (10) steht.

10. Arbeitsplatte nach einem der Ansprüche 1 bis 9,
**dadurch gekennzeichnet,**
**daß** die Führungsschlitze (32) zu den oberen Enden hin mit zunehmendem Abstand zum Wandelement oder zur Tür (10) ausgebildet sind, damit in der Ablagestellung der Rand (21) der Arbeitsplatte (20) Platz findet.

## Claims

1. Work-surface panel which is fitted on a wall element or a door of a switch cabinet and can be moved from a storage position, in which it is parallel to the wall element or to the door, into a swung-down, working position, it being the case that that horizontal side of the work-surface panel (20) which is at the top in the storage position is guided in a vertically adjustable manner, by means of articulation pins (22), in introduction slots (32) in the wall element or door, it being the case that the vertical sides of the work-surface panel (20) are supported in an articulated manner on the wall element or on the door (10) via in each case one link (24), and it being the case that the points of articulation (25) of the links (24) are arranged on the wall element or on the door (32) and, with the dimensioning of the links (24), designed such that, with the articulation pins (22) introduced in retaining mounts (34), the work-surface panel (20) assumes the desired working position in relation to the wall element or to the door (10), **characterized in that** the bottom ends of the guide slots (32) merge, via transition sections (33) which are directed away from the wall element or from the door (10), into upwardly oriented retaining mounts (34) for the articulation pins (22), and **in that**, in the working position, the points of articulation (23) of the links (24) on the work-surface panel (20) are arranged beneath the articulation pins (22).

2. Work-surface panel according to Claim 1, **characterized in that** the articulation pins (22) and the points of articulation (23) are arranged on a bent border (21) of the work-surface panel (20), the border (21), in the parallel storage position, being directed towards the wall element or the door (10).

3. Work-surface panel according to Claim 2, **characterized in that** the border (21) extends over all four sides of the rectangular work-surface panel (20).

4. Work-surface panel according to one of Claims 1 to 3, **characterized in that** the guide slot (32), the transition section (33) and the retaining mount (34) are introduced in a side leg (31) of a fastening bar (30), said leg being located perpendicularly to the wall element or to the door (10).

5. Work-surface panel according to one of Claims 1 to 4, **characterized in that** the articulation pins (22) on the work-surface panel (20) are formed by screws with screw heads which are screwed into the border (21) of the work-surface panel (20) through the guide slots (32), the diameter of the screw head being greater than the width of the guide slots (32).

6. Work-surface panel according to one of Claims 1 to 5, **characterized in that** the fastening bar (30) is of U-shaped design and butts against the wall element or the door (10) by way of its central leg (36), and **in that** suspension lugs (38) are bent from the side leg (37), which is directed away from the work-surface panel (20), of the fastening bar (30), the fastening bar (30) being screwed firmly to a reinforcing frame (12), which is connected to the wall element or to the door (10), by said suspension lugs.

7. Work-surface panel according to one of Claims 1 to 6, **characterized in that** the links (24) are articulated on the sides of the side legs (31) of the fastening bars (30), said legs being provided with the guide slots (32), which are directed away from the work-surface panel (20).

8. Work-surface panel according to one of Claims 1 to 7, **characterized in that** the links (24) are articulated on the work-surface panel (20) via spacer elements, with the result that, in the storage position, they are located on the sides of the side legs (31) of the fastening bars (30), said legs being provided with the guide slots (32), which are directed away from the work-surface panel (20), and **in that** said side legs (31) are provided with recesses (35) for accommodating the spacer elements of the points of articulation (23) mounted on the work-surface panel.

9. Work-surface panel according to one of Claims 1 to 8, **characterized in that**, in the working position, it is located perpendicularly to the wall element or to the door (10).

10. Work-surface panel according to one of Claims 1 to 9, **characterized in that**, in the direction of the top ends, the guide slots (32) are designed to be increasingly spaced apart from the wall element or the door (10), in order that there is space for the border (21) of the work-surface panel (20) in the storage position.

## Revendications

1. Tablette fonctionnelle qui est fixée à un élément de cloison ou à une porte d'une armoire de distribution et qui peut être amenée d'une position de rangement parallèle à l'élément de cloison ou à la porte à une position fonctionnelle dépliée, le côté horizontal supérieur en position de rangement de la plaque fonctionnelle (20) étant guidé de manière à pouvoir être positionné dans le sens vertical au moyen d'axes d'articulation (22) dans des fentes d'introduction (32) fixes de l'élément de cloison ou de la porte, les côtés verticaux de la tablette fonctionnelle (20) étant chacun soutenus de manière articulée à l'élément de cloison ou à la porte (10) à l'aide d'un bras articulé (24), les points d'articulation (25) du bras articulé (24) étant disposés sur l'élément de cloison ou sur la porte (32) et étant conçus de telle manière avec les dimensions du bras articulé (24) que la tablette fonctionnelle (20) prenne la position fonctionnelle souhaitée par rapport à l'élément de cloison ou à la porte (10) lorsque les axes d'articulation (22) sont introduits dans les logements de maintien (34),
**caractérisée en ce**
**que** les extrémités inférieures des fentes de guidage (32) passent au-dessus des sections de transition (33) à l'opposé de l'élément de cloison ou de la porte (10) dans les logements de maintien (34) dirigés vers le haut pour les axes d'articulation (22), et
**qu'**en position fonctionnelle, les points d'articulation (23) du bras articulé (24) sont disposés au niveau de la tablette fonctionnelle (20) sous les axes d'articulation (22).

2. Tablette fonctionnelle selon la revendication 1, **caractérisée en ce que** les axes d'articulation (22) et les points d'articulation (23) sont disposés au niveau d'un bord coudé (21) de la tablette fonctionnelle (20), le bord (21) étant dirigé vers l'élément de cloison ou vers la porte (10) en position de rangement parallèle.

3. Tablette fonctionnelle selon la revendication 2, **caractérisée en ce que** le bord (21) s'étend sur les quatre côtés de la tablette fonctionnelle rectangulaire (20).

4. Tablette fonctionnelle selon l'une des revendications 1 à 3, **caractérisée en ce que** la fente de guidage (32), la section de transition (33) et le logement de maintien (34) sont disposés dans une branche latérale (31) d'une baguette de fixation (30) qui est perpendiculaire à l'élément de cloison ou à la porte (10).

5. Tablette fonctionnelle selon l'une des revendications 1 à 4, **caractérisée en ce que** les axes d'articulation (22) sur la tablette fonctionnelle (20) sont réalisés à l'aide de vis à têtes de vis qui sont vissées à travers la fente de guidage (32) dans le bord (21) de la tablette fonctionnelle (20), le diamètre de la tête de vis étant supérieur à la largeur de la fente de guidage (32).

6. Tablette fonctionnelle selon l'une des revendications 1 à 5,
**caractérisée en ce**
**que** la baguette de fixation (30) est réalisée en forme de U et sa branche centrale (36) repose sur l'élément de cloison ou sur la porte (10), et
**que** des languettes d'accrochage (38) sont pliées sur la branche latérale (37) de la baguette de fixation (30) opposée à la tablette fonctionnelle (20) avec lesquelles la baguette de fixation (30) est vissée à un cadre raidisseur (12) relié à l'élément de cloison ou à la porte (10).

7. Tablette fonctionnelle selon l'une des revendications 1 à 6, **caractérisée en ce que** les bras articulés (24) sont articulés sur les côtés opposés à la tablette fonctionnelle (20) de la branche latérale (31) des baguettes de fixation (30) munis des fentes de guidage (32).

8. Tablette fonctionnelle selon l'une des revendications 1 à 7,
**caractérisée en ce**
**que** les bras articulés (24) sont articulés à la tablette fonctionnelle (20) par des éléments d'écartement de manière à ce qu'en position de rangement ils viennent reposer sur les côtés des branches latérales (31) munies des fentes de guidage (32) des baguettes de fixation (30) qui sont à l'opposé de la tablette fonctionnelle (20), et
**que** ces branches latérales (31) sont munies de creux (35) pour recevoir les éléments d'écartement des points d'articulation fixes (23) de la tablette fonctionnelle.

9. Tablette fonctionnelle selon l'une des revendications 1 à 8, **caractérisée en ce qu'**en position fonctionnelle elle est perpendiculaire à l'élément de cloison ou à la porte (10).

10. Tablette fonctionnelle selon l'une des revendications 1 à 9, **caractérisée en ce que** les fentes de guidage (32) présentent un écart croissant par rapport à l'élément de cloison ou à la porte (10) vers l'extrémité supérieure afin que le bord (21) de la tablette fonctionnelle (20) ait de la place en position de rangement.
